# EUROPÄISCHE PATENTANMELDUNG

(11) **EP 0 625 372 A2**
(43) Veröffentlichungstag der Anmeldung: **23.11.1994**
(21) Anmeldenummer: 94106676.3
(22) Anmeldetag: 28.04.1994
(51) Int. Cl.: B02C 15/14, B28B 17/02

(54) **Vorrichtung zum Abführen aufbereiteter plastischer, insbesondere keramischer Masse**

(30) Priorität: 06.05.1993 DE 4315107
(71) Anmelder: INGENIEURBÜRO FRANZ VOGEL GmbH, D-88267 Vogt (DE)
(72) Erfinder: Vogel, Franz, Dipl.-Ing., D-88267 Vogt (DE); Müller, Hartwig, Dipl.-Ing., W-32457 Porta Westfalica (DE)
(74) Vertreter: Liesegang, Roland, Dr.-Ing.

(57) **Zusammenfassung**

Vorrichtung zum Abführen aufbereiteter plastischer, insbesondere keramischer, Masse, wie Ziegelton, mit einer zumindest teilweise kreisringförmigen Sammelbahn (32) zum Aufnehmen und Austragen der plastischen Masse, die von einer über der Sammelbahn angeordneten, im Umlauf um eine zentrale Welle (20) die plastischen Masse zerkleinernden Aufbereitungsvorrichtung auf die Sammelbahn (32) fällt, bei dem die Sammelbahn (32) mindesten ein endlos umlaufendes Sammelband aufweist, das sich zumindest um einen Teil das Umfangs der zentralen Welle erstreckt.

## Beschreibung

Die Erfindung betrifft eine Vorrichtung zum Abführen aufbereiteter, plastischer, insbesondere keramischer Masse nach dem Oberbegriff von Patentanspruch 1. Eine solche Vorrichtung kann beispielsweise bei einem Kollergang oder bei einem Siebrundbeschicker zum Aufbereiten von Ziegelton verwendet werden.

Ein bekannter Kollergang mit einem umlaufenden Sammelteller zum Austragen des Mahlgutes ist beispielsweise in der DE-A 4210118 beschrieben. Dieser Kollergang weist eine horizontale, kreisscheibenförmige Mahlbahnfläche, einen inneren und einen äußeren, in Umfangsrichtung der Mahlbahnfläche auf dieser umlaufenden Läufer, Material-Leitelemente und eine zentrale Materialzuführung auf. Der vom äußeren Läufer überrollte Mahlbahn-Ringbereich weist Durchbrechungen auf, durch die das Mahlgut hindurchgedrückt wird, so daß es auf einen darunter angeordneten Sammelteller zum Austragen der aufbereiteten Masse fällt. Von dort wird die keramische Masse auf nachgeschaltete Maschinen oder Anlagen verteilt wird. Bei einem rotierenden Sammelteller wird das aufgefangene Material durch eine stationäre Abstreifervorrichtung oder eine kombinierte Vorrichtung aus einem stationären Abstreiferelement und rotierenden Vertikal-Topfscheiben, horizontalen Schiebern oder dergleichen ausgetragen.

Eine ähnliche Vorrichtung zum Abführen aufbereiteter plastischer Masse kann bei einem Siebrundbeschicker vorgesehen werden. Ein solcher Siebrundbeschicker ist beispielsweise in der DE-A 1782337 beschrieben.

Bei diesen und ähnlichen Vorrichtungen zum Abführen aufbereiteter keramischer Massen liegt ein Nachteil darin, daß das gleichmäßig auf die Sammeltellerfläche aufgegeben Mahl- oder Schüttgut an der Abstreif- oder Austragstelle zusammengeschoben, angehäuft und verdichtet wird. Vorallem plastische Massen kleben oder haften aneinander, und es bilden sich großstückige Materialklumpen, Schollen, Anhäufungen und dergleichen, was die Dosierung und Verteilung auf nachgeschaltete Maschinen beeinträchtigt.

Der Erfindung liegt daher die Aufgabe zugrunde, eine Vorrichtung zum Abführen aufbereiteter keramischer oder ähnlicher plastischer Massen, wie Ziegelton, für einen Kollergang, einen Siebrundbeschicker oder dergleichen zu schaffen, die die beschriebenen Nachteile bekannter Sammelteller vermeidet, und mit der ein kontinuierlicher Austrag des Mahlgutes möglich ist, und zwar weitgehend ohne das Material zusammenzuschieben und zu verdichten.

Diese Aufgabe wird erfindungsgemäß durch eine Vorrichtung mit den Merkmalen von Patentanspruch 1 gelöst.

Bei Verwendung eines endlos umlaufenden Sammelbandes wird das über den Umfang beispielsweise eine Kollergangs oder eines Siebrundbeschickers gleichmäßig abgegebene, aufbereitete Material auf dem Obertrum des Sammelbandes gesammelt und kontinuierlich am Bandaustragsende bzw. an der ensprechenden Bandumlenkung abgegeben oder abgeworfen. Dazu ist im Vergleich zu Vorrichtungen mit einem Sammelteller eine kontinuierliche, dosierte und gleichmäßige Materialabführung möglich. Größe und Beschaffenheit der vom umlaufenden Sammelband an nachgeschaltete Maschinen abgegebenen Materialstücke sind dabei relativ konstant und entsprechen im wesentlichen der Materialbeschaffenheit der von der Aufbereitungsvorrichtung abgegebenen Masse.

Je nach dem, wieviele Abgabepositionen für aufbereitetes Material erforderlich oder gewünscht sind, kann ein einzelnes, im wesentlichen kreisringförmig umlaufendes Sammelband oder können mehrere, sich jeweils über einen Kreisringabschnitt erstreckende Sammelbänder vorgesehen sein.

Weitere Merkmale und Vorteile der Erfindung ergeben sich auch den Unteransprüchen. Im folgenden sind bevorzugte Ausführungsformen der Erfindung mit Bezug auf die Zeichnung näher erläutert. Es zeigen:
- Fig. 1: eine Seitenansicht eines Kollergangs mit der erfindungsgemäßen Vorrichtung, wobei zur Verdeutlichung Gehäuseteile weggebrochen sind und die eine - rechte - Kollergangseite weggelassen ist,
- Fig. 2: eine Seitenansicht eines Siebrundbeschickers mit einer Vorrichtung nach der Erfindung, in einer ähnlichen Darstellung wie der von Fig. 1, und
- Fig. 3 u. 4: schematische Darstellungen einer ersten und einer zweiten Ausführungsform der erfindungsgemäßen Vorrichtung in Draufsicht.

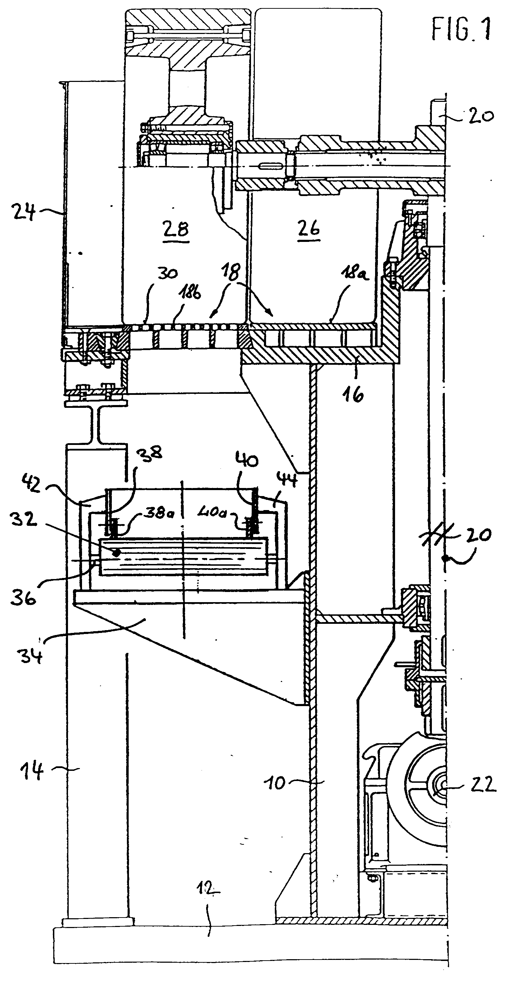

Der Kollergang von Fig. 1 ruht auf einer Konstruktion, die aus einem eine Mittelsäule 10 tragenden Fundament 12 und einem mit Abstand darüber liegenden, von Säulen 14 gehaltenen Tragboden 16 besteht, auf dem ein kreisförmiger Rostgut in seinem Zentrum durch den Tragboden 16 bzw. die Mittelsäule 10 und an seinem Außenumfang durch die Säulen 14 abgestützt ist. Die Mittelsäule 10 und der Rost 18 werden von einer vertikalen Königswelle 20 durchsetzt, die an ihrem unteren Ende über ein Getriebe von einem Motor 22 angetrieben ist und deren oberes Ende sich über dem Rost 18 befindet, und zwar innerhalb einer vom Außenumfang des Rostes 18 senkrecht nach oben abstehenden Seitenwand 24. Auf der Oberfläche des Rostes 18, welche die Mahlbahnfläche darstellt, laufen zwei Läufer um, nämlich ein innerer Läufer 26 und ein äußerer Läufer 28, die in üblicher Weise über Querarme an der Königswelle 20 vertikal verschiebbar gelagert sind und von dieser angetrieben werden. Weiterhin sind an der Königswelle 20 zwei Brechflächen-Anordnungen befestigt, nämlich eine dem inneren Läufer 26 in dessen Umlaufrichtung nachlaufende erste Brechfläche und eine dem äußeren Läufer 28 nachlaufende zweite Brechfläche (nicht gezeigt). Auf dem freien oberen Ende der Königswelle 20 sitzt eine rinnenförmige Materialzuführung (ebenfalls nicht gezeigt), die über einen Förderer, etwa einen Bandförderer mit den zu zerkleinernden Material beschickt wird und das Material auf die Mahlbahnfläche abgibt. Der Rost 18 ist in eine innere Mahlbahnfläche 18a ohne Durchbrechungen und eine äußere Mahlbahnfläche 8b mit Durchbrechungen 30 unterteilt, wobei die innere Mahlbahnfläche 18a vom Innenläufer 26 und die äußere Mahlbahnfläche 18b vom Außenläufer 28 überrollt wird.

Unter der äußeren Mahlbahnfläche 18b verläuft ein sich um den Umfang der Mittelsäule 10 erstreckendes Sammelband 32. Das endlos umlaufende Sammelband 32 ist auf mehreren, um den Umfang der Mittelsäule 10 verteilten Tragarmen oder einem Tragring 34 gelagert und um auf den Tragarmen oder einem Tragring abgestützten Umlenkwalzen 36 geführt, wobei mindestens eine der Umlenkwalzen mit einem geeigneten Antrieb (nicht gezeigt) verbunden ist. Direkt über dem Sammelband sind längs dessen seitlichen Längsrändern eine innere und eine äußere Führungswand 38, 40 vorgesehen. Die Führungswände 38, 40 sind über entsprechende Träger 42 bzw. 44, an denen auch die Walze 36 gelagert ist, am Tragarm oder einem Tragring 34 abgestützt.

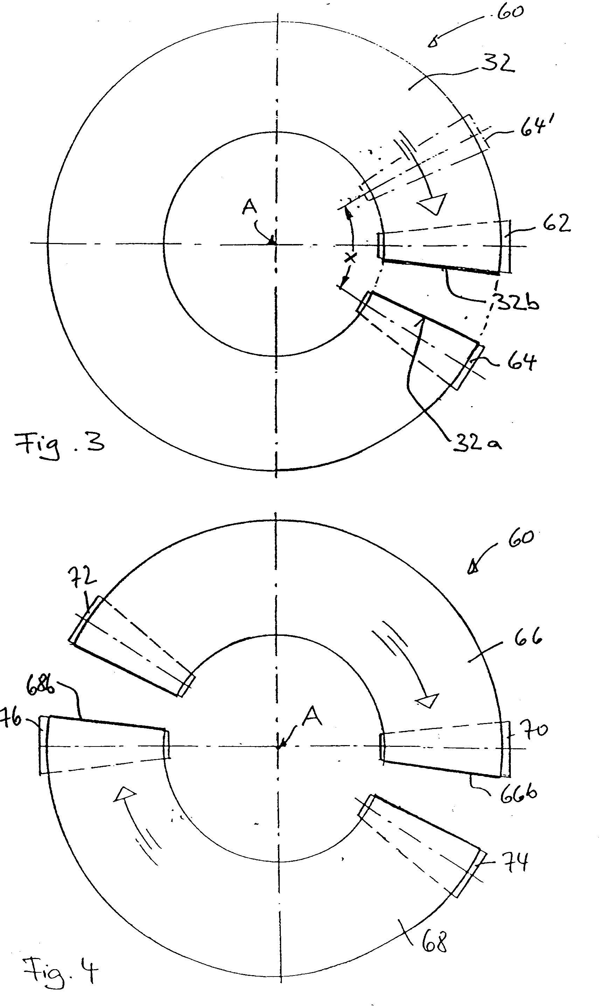

Bei Betrieb des Kollergangs fällt das zerkleinerte Malgut durch die Durchbrechungen 30 in der äußeren Mahlbahnfläche 18b auf das umlaufende Sammelband 32. Dabei verhindern die Führungswände 38 und 40, und die daran befestigten, je nach Verschleiß nachstellbaren Dichtelemente 38a und 40a aus Stahl, Kunststoff oder Gummi daß Mahlgut unkontrolliert seitlich vom Sammelband 32 herunter fallen kann. Das in zur Bewegungsrichtung der Läufer 26, 28 in entgegengesetzter Richtung umlaufende Sammelband 32 nimmt kontinuierlich zerkleinertes Material auf und gibt es an einem Austragsende an eine nachgeschaltete Maschine oder Einrichtung ab, wie weiter unten mit Bezug auf Fig. 3 und 4 noch näher erläutert ist. Am Austragsende ist eine durch Stellschrauben, Federdruck, pneumatisch oder hydraulisch angepreßte Leiste für die Reinigung der Bandoberfläche aus Metall, Kunststoff oder Gummi angebracht.

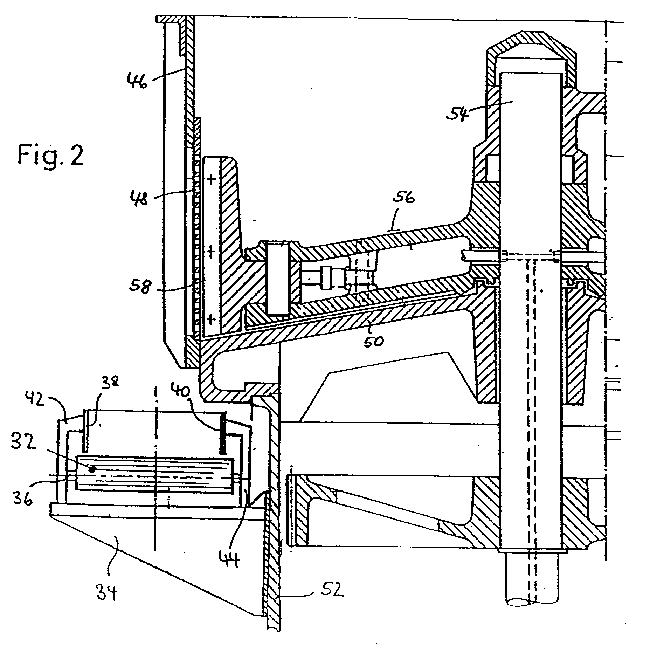

Eine weitere Anwendungsmöglichkeit für die erfindungsgemäße Vorrichtung liegt auf dem Gebiet der Siebrundbeschicker. Bei dem in Fig. 2 dargestellten Siebrundbeschicker ist ein feststehender Bottich 46 an seinem Umfang im unteren Teil mit Sieblochblechen 48 besetzt. Mit 50 ist der Boden 46 bezeichnet, mit 52 das Gestell des Siebrundbeschickers. Durch das Gestell 52 und den Boden ist koaxial zum Bottich 46 eine Welle 54 geführt, auf der drehfest ein Ausstreicharm 56 mit einer Austreichfläche 58 an seinem äußeren Ende befestigt ist.

Unter und radial zumindest teilweise außerhalb der Sieblochfläche 48 ist auf ähnliche Weise wie beim Kollergang von Fig. 1 das endlos umlaufende Sammelband 32 angeordnet. Ein Tragarm oder ein Tragring 34 ist am Gestell 52 des Siebrundbeschickers befestigt, und auf dem Tragarm oder einem Tragring sind die Träger 42 und 44 für die Führungswände 38 bzw. 40 und die Lagerung der Umlenkwalze 36 angebracht.

Bei umlaufenden Austreicharm wird die zu zerkleinernde Masse, beispielsweise Ziegelton, von der Ausstreichfläche 38 durch die Sieblochbleche 48 hindurch seitlich auß dem Bottich 46 herausgedrückt und fällt auf das darunter liegende Sammelband 32. Dabei stellen die inneren und die äußere Führungsseitenwände 38 bzw. 40 sicher, daß das vom Sammelband abtransportierte Material nur an dessen Austragsende in der korrkten Abwurfposition abgegeben werden kann.

Im folgenden sind verschiedene Ausführungsformen der erfindungsgemäßen Sammelbahn mit Bezug auf Fig. 3 und 4 näher erläutert.

In Fig. 3 ist eine Sammelbahn 60 gezeigt. bei der ein einzelnes endlos umlaufendes Sammelband 32 um zwei konische Umlenkwalzen 62 und 64 geführt ist. Das Obertrum des Sammelbandes 32 verläuft in einer Ebene vom Bandanfang 32a bei Umlenkwalze 36 zum Bandaustragsende 32b bei der Umlenkwalze 62 in Pfeilrichtung. Die Abwurfposition ist durch einen zwischen den beiden Bandenden 32a, 32b freigelassenen Ringspalt bestimmt. Bei einer alternativen Ausgestaltung kann der Bandanfang 32a bei einer Umlenkwalze 64' auch über dem Bandende 32b liegen, wobei ein Überlappungsbereich von etwa x/2 entsteht. Diese Anordnung ist dann vorteilhaft, wenn das aufbereitete Material über dem gesamten Umfang der Mahlbahn des Kollergangs oder des Siebrundbeschickers oder einer ähnlichen Anlage austreten kann, und eine besonders gleichmäßige Abgabe des zerkleinerten Materials am Austragsende 32b des Sammelbandes erwünscht ist.

Die in Fig. 4 gezeigte Ausführungsform der Sammelbahn umfaßt zwei von einander unabhängige, endlos umlaufende Sammelbänder 66, 68, die jeweils Teile eines Kreisringes beschreiben und dieselbe Umlaufrichtung aufweisen. Die beiden Sammelbänder 66 und 68 erstrecken sich in einer Kreisringbahn in derselben Ebene, wobei das Sammelband 66 um konischen Umlenkwalzen 70 und 72 geführt ist und das Sammelband 68 um konischen Umlenkwalzen 74 und 76. Durch diese erfindungsgemäße Ausführungsform der Sammelbahn 60 ergeben sich zwei Abwurfpositionen an den Austragsenden 66b und 68b der beiden Sammelbänder. Entsprechend der Anforderungen der nachgeschalteten Anlage kann auch eine Sammelbahn mit mehr als zwei, jeweils längs eines Kreisringabschnittes verlaufenden Sammelbändern vorgesehen sein, wobei die Obertrums der Sammelbänder 66 und 68 vorzugsweise in derselben Ebene liegen. Alternativ können die Bandanfänge 72 und 74 über den Bandenden 70 und 76 liegen, mit einem Überlappungsbereichvon etwa x/2.

Zur Stabilisierung des umlaufenden Sammelbandes können zwischen den dargestellten Umlenkwalzen am Bandanfang und am Bandende zusätzliche über denen Länge verteilte Lagerwalzen oder am inneren Umfang und am äußeren Umfang des Bandes verlaufende Stützrollen vorgesehen sein. Die Führungsumlenkwalzen selbst sind konisch ausgebildet, wobei die verlängerte Mantellinie des Konus die Mittelachse oder Drehachse A, um welche das Sammelband umläuft, schneidet.

Das Sammelband selbst kann ein elastisches Kunststoff-, Gewebe-, oder Gummiband sein, in das zur zusätzlichen Stabilisierung- bzw. Bandführung Laschen-, Rollen- und Gliederketten oder aber auch Stahl-, Gummi- und Kunstoffseile eingesetzt sein können. Der endlose Bandgurt ist mit diesen Führungs- und Förderelementen verbunden, und diese werden wiederum durch Stützrollen, Kettenräder, Ringnuten, Ringgleitflächen u.ä. Elemente kreisringförmig geführt und am Bandanfang oder Bandende über die Umlenkeinrichtung angetrieben.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Vorrichtung zum Abführen aufbereiteter plastischer, insbesondere keramischer Massen, mit einer, zumindest teilweise kreisringförmigen Sammelbahn (32) zum Aufnehmen und Austragen der plastischen Masse, die von einer über der Sammelbahn angeordneten, im Umlauf um eine zentrale Welle (20) die plastischen Masse zerkleinernden Aufbereitungsvorrichtung auf die Sammelbahn fällt, dadurch **gekennzeichnet**, daß die Sammelbahn mindestens ein endlos umlaufendes Sammelband (32) aufweist, das sich zumindest um einen Teil das Umfangs der zentralen Welle erstreckt.

2. Vorrichtung nach Anspruch 1, dadurch **gekennzeichnet**, daß das Obertrum der Sammelbahn (32) in zur Umlaufrichtung der Aufbereitungsvorrichtung entgegengesetzter Richtung bewegbar ist, wodurch ein zusätzlicher Mischeffekt erzielt wird.

3. Vorrichtung nach Anspruch 1 oder 2, dadurch **gekennzeichnet**, daß das Sammelband die aufbereitete Masse kontinuierlich auffängt und abführt.

4. Vorrichtung nach Anspruch 1, 2 oder 3, dadurch **gekennzeichnet**, daß die Sammelbahn genau ein endlos umlaufendes Sammelband (32) aufweist, dessen Obertrum längs eines im wesentlichen geschlossenen Kreisrings verläuft.

5. Vorrichtung nach Anspruch 4, dadurch **gekennzeichnet**, daß sich die beiden Enden des Sammelbandes (32) überlappen, wobei das in Bewegungsrichtung des Obertrumms hintere Ende des Sammelbandes über dem entsprechenden vorderen (Austrags-) Ende des Sammelbandes liegt.

6. Vorrichtung nach Anspruch 1, 2 oder 3, dadurch **gekennzeichnet**, daß die Sammelbahn mehrere, in ein und derselben Richtung endlos umlaufende Sammelbänder aufweist, die sich jeweils längs eines Kreisringabschnittes erstrecken.

7. Vorrichtung nach Anspruch 6, dadurch **gekennzeichnet**, daß die mehreren Sammelbänder in einer Ebene liegen, und daß zwischen Bandaustragsende des einen Sammelbandes und Bandanfang des nachfolgenden Sammelbandes ein freier Ringspalt liegt, wobei das Bandende und der Bandanfang durch die Bewegungsrichtung des Obertrums des jeweiligen Sammelbandes bestimmt sind.

8. Vorrichtung nach Anspruch 6, dadurch **gekennzeichnet**, daß zumindest bei einem Teil der sich jeweils über einen Kreisringabschnitt erstreckenden Sammelbänder das Bandaustragsende des einen Sammelbandes über dem Bandanfang des nachfolgenden Sammelbandes liegt, wobei das Bandende und der Bandanfang durch die Bewegungsrichtung des Obertrums des jeweiligen Sammelbandes bestimmt sind.

9. Vorrichtung nach einem der vorangehenden Ansprüche, dadurch **gekennzeichnet**, daß das Sammelband ein um mindestens zwei Umlenkwalzen (36) umlaufendes, elastisches Kunststoff- Gewebe- oder Gummiband ist.

10. Vorrichtung nach Anspruch 9, dadurch **gekennzeichnet**, daß die Umlenkwalzen konisch sind.

11. Vorrichtung nach einem der vorangehnden Ansprüche, **gekennzeichnet** durch eine innere und eine äußere vertikale Führungswand (40, 42), die über der radial inneren bzw. äußeren Längsseite des Sammelbandes (32) angeordnet sind.

12. Vorrichtung nach Anspruch 11, **gekennzeichnet** durch nachstellbare Dichtelemente zwischen Führungswand (40, 42) und Sammelband.

13. Vorrichtung nach einem der vorangenden Ansprüche, **gekennzeichnet** durch mindestens einen Tragarm oder Tragring (34) zur Unterstützung des Sammelbandes (32).

14. Vorrichtung nach einem der vorangehenden Ansprüche, **gekennzeichnet**, durch mehrere, gleichmäßig über den Umfang eines Sockels (10; 52) der Aufbereitungsvorrichtung verteilte Tragarme oder einem Tragring (34) zur Halterung und Führung des Sammelbandes.

15. Kollergang zum Aufbereiten plastischer, insbesondere keramischer Masse, mit einer horizontalen, kreisscheibenförmigen Mahlbahn (18), die von einem vertikal auf einer Mittelsäule (10) abgestützten Tragboden getragen ist, einer die keramische Masse kontinuierlich auf die Mahlbahn aufgebenden Materialzuführung, einem inneren und einem äußeren in Umfangsrichtung der Mahlbahn auf dieser umlaufenden Läufer und einer vertikalen, die Läufer (26, 28) zentrisch antreibenden Königswelle (30), **gekennzeichnet** durch eine Vorichtung zum Abführen der aufbereiteten keramischen Masse nach einem der vorangehenden Ansprüche 1 bis 14.

16. Kollergang nach Anspruch 15, dadurch **gekennzeichnet**, daß die Mahlbahn (10) einen über dem Sammelband verlaufenden Mahlbahnrost aufweist, der von den Läufern (26, 28) überrollt wird, wobei das Mahlgut kontinuierlich durch den Rost hindurch auf das Sammelband (32) fällt.

17. Kollergang nach Anspruch 15, dadurch **gekennzeichnet**, daß die Mahlbahn eine geschlossene Mahlbahnfläche aufweist, die von den Läufern überrollt wird, wobei das Mahlgut kontinuierlich über den äußeren Rand der Mahlbahnfläche auf das darunter liegende Sammelband (32) fällt.

18. Kollergang nach Anspruch 15, dadurch **gekennzeichnet**, daß die Mahlbahn eine geschlossene Mahlbahnfläche mit einer Austragsöffnung aufweist, die von den Läufern überrollt wird, wobei das Mahlgut durch die Austragsöffnung auf das darunter liegende Sammelband (32) fällt.

19. Kollergang nach einem der Ansprüche 15 bis 18, **gekennzeichnet** durch in Bewegungsrichtung der Läufer (26, 28) diesen nachlaufenden, von der Königswelle (20) angetriebenen Brechflächen.

20. Siebrundbeschicker zum Aufbereiten plastischer, insbesondere keramischer Masse, mit einem feststehenden zylindrischen Bottich (46), der an seinem Umfang mit Siebblechen (48) besetzt ist, durch welche die plastische Masse von der Ausstreichfläche (58) eines im Bottich umlaufenden Ausstreicharmes (56) gedrückt wird, und mit einer den Ausstreicharm zentrisch antreibenden Königswelle (54), **gekennzeichnet** durch eine Vorrichtung zum Abführen der aufbereiteten plastische Masse nach einem der vorangehenden Ansprüche 1 bis 13.
